# EUROPÄISCHE PATENTSCHRIFT

(11) **EP 1 650 059 B1**
(45) Veröffentlichungstag und Bekanntmachung des Hinweises auf die Patenterteilung: **19.12.2007**
(21) Anmeldenummer: 05018856.4
(22) Anmeldetag: 31.08.2005
(51) Int. Cl.: B60D 1/06, B60D 1/54

(54) **Anhängekupplung für Kraftfahrzeuge**
Trailer coupling for motor vehicles
Attelage de remorque pour véhicules automobiles

(30) Priorität: 25.10.2004 DE 102004051976
(43) Veröffentlichungstag der Anmeldung: 26.04.2006
(73) Patentinhaber: WESTFALIA - Automotive GmbH, 33378 Rheda-Wiedenbrück (DE)
(72) Erfinder: Hermbusch, Gerhard, 33449 Langenberg (DE); Peitz, Jürgen, 33378 Rheda-Wiedenbrück (DE)
(74) Vertreter: Grosse, Wolf-Dietrich Rüdiger

(56) Entgegenhaltungen:
- EP-A- 1 225 067
- EP-A- 1 407 901

## Beschreibung

Die Erfindung betrifft eine Anhängekupplung für Kraftfahrzeuge, die über einen Querträger fahrzeugfest angeordnet ist, umfassend eine an ihrem freien Ende eine Kupplungskugel tragende Kugelstange, die in einem verschwenkbaren Kupplungsgehäuse vorgesehen und mittels einer Antriebseinrichtung von einer Betriebsstellung in eine Ruhestellung verstellbar ist und während dieser Verstellung der Schwenkbewegung eine Drehbewegung der Kugelstange überlagert wird, deren gehäuseseitiges Kugelstangenende dazu getrieblich mit der Innenseite des Kupplungsgehäuses gekoppelt ist.

Eine Anhängekupplung dieser Art ist durch die EP 1 407 901 A1 bekannt geworden. Als Antriebseinrichtung kommt vorzugsweise ein als Getriebemotor ausgebildeter Elektromotor zum Einsatz, der direkt auf das Kupplungsgehäuse aufgesetzt ist und mit der zweiachsig kardanisch gelagerten Kugelstange in Wirkverbindung steht. Zur Erzeugung der überlagerten Rotationsbewegung der Kugelstange ist ein mehrteiliges Getriebe erforderlich, das aus einem Schwenkgetriebe und einem Drehgetriebe besteht. Der Antriebsmotor ist mit einer Schneckenwelle, die mit einem großen Zahnrad kämmt, des Schwenkgetriebes verbunden. Durch eine Drehung der Schneckenwelle bewegt sich der Antriebsmotor mit dem angeflanschten Kupplungsgehäuse in der gewünschten Drehrichtung um die Schwenkachse nach links oder rechts. Das ebenfalls in dem Kupplungsgehäuse angeordnete Drehgetriebe setzt sich aus einem am Kugelstangenende umfangsseitig angeordneten Zahnkranz und einem zur Schwenkachse konzentrischen Zahnbogen zusammen. Sobald das Gehäuse mit der darin gelagerten Kugelstange um die Schwenkachse schwenkt, wälzt der Zahnkranz auf dem Zahnbogen ab, wodurch die Kugelstange um die Drehachse gedreht wird.

Abgesehen von dieser aufwendigen Getriebemechanik verwirklicht diese bekannte Anhängevorrichtung eine komplizierte Übertragungsvorrichtung, um die drehende Antriebsbewegung in eine in Richtung der horizontalen Schwenkachse verlaufende translatorische Verriegelungsbewegung umzuwandeln, damit sich Riegelelemente, ausgebildet als Zahnleisten oder als Sperrkugeln, mit Kugelaufnahmen und Kugelführungen in einem formschlüssigen Verriegelungseingriff bringen lassen. Das Kupplungsgehäuse mit dem Schwenklager wird hierzu auf der Schwenkachse in Richtung auf den die Baueinheit tragenden Querträger eingerückt (zum Verriegeln) oder von diesem abgerückt (zum Entriegeln).

Bei einer aus der DE 20 2004 006 666 U1 bekannten Anhängekupplung mit Antriebsmotor zum Verschwenken einer Kugelstange mit überlagerter Drehbewegung ist das von der Kupplungskugel entfernte Kugelstangenende mit einer Drehlagerung in einem Gleitklotz angeordnet, an den der Antriebsmotor eingreift. Der Gleitklotz bewegt sich auf einer gewinkelten Bodenplatte des Antriebsgehäuses quer zur Fahrtrichtung. Sobald der Gleitklotz bei seiner Bewegung auf der Bodenplatte den Punkt überstreicht, an dem die Bodenplatte nach unten abgewinkelt ist, d.h. dort, wo die waagerechte Ebene in eine schiefe Ebene übergeht, bewirkt der Wechsel zwischen diesen beiden Ebenen ein Kippen des Gleitklotzes während seiner Bewegung. Dieses Kippen ersetzt das Schwenken des Gleitklotzes zum Anheben bzw. Absenken -je nach Bewegungsrichtung der Verstellung des Gleitklotzes - der Kugelstange. Zum Einleiten der Drehbewegung der Kugelstange greift der Gleitklotz mit einer Nase in eine asymmetrische Nut der Rückwand des Antriebsgehäuses ein. Bei der weiteren Bewegung des Gleitklotzes mittels des Antriebsmotors lässt sich in der Folge durch die Keilwirkung ein Verdrehen der Kugelstange erreichen.

Aus der EP 1 225 067 A2 ist eine Anhängekupplung nach dem Oberbegriff des Anspruchs 1 bekannt.

Der Erfindung liegt die Aufgabe zugrunde, eine gattungsgemäße Anhängekupplung mit einfacherer, verbesserter Betriebsweise zur Durchführung der Schwenkbewegung mit überlagerter Drehbewegung zu schaffen.

Diese Aufgabe wird erfindungsgemäß dadurch gelöst, dass an zumindest einer Längswand - vorzugsweise aus Symmetriegründen und zur besseren Bewegungsübertragung an beiden Außenseiten der Längswände - des schwenkbaren Kupplungsgehäuses eine Steuerscheibe angeordnet ist, die mit Steuerkurven und Führungsschlitzen zum sukzessiven Absenken und Anheben des Kupplungsgehäuses bei dessen Schwenkbewegung sowie gleichzeitiger, positionsabhängiger Einleitung der Drehbewegung der Kugelstange ausgebildet ist, wobei den Steuerkurven und den Führungsschlitzen der sich mit dem verschwenkenden Kupplungsgehäuse verlagernden Steuerscheibe stationäre Bewegungsfolgerstifte zugeordnet sind. Es lässt sich damit ohne zusätzliche Getriebetechnik mit dem Einsetzen der Beaufschlagung durch die Antriebseinrichtung, vorzugsweise eine E-lektro-Motor-Einheit, ein kontinuierlicher Folgeablauf zum Absenken der Kupplungsstange, damit diese unter die Heckschürze eines Fahrzeugs ungehindert abtauchen kann, und anschließendes Anheben in ihre Ruhestellung, in der die Kupplungsstange quer zur Fahrzeugslängsrichtung nach vorne hin nicht sichtbar hinter der Heckschürze liegt, oder in ihre Betriebsstellung, in der sich die Kugelstange in Fahrzeugslängsrichtung erstreckt, erreichen.

Ein Vorschlag der Erfindung sieht hierzu vor, dass das Kupplungsgehäuse mit einem oberen und einem unteren Bogenschlitz auf Bewegungsfolgerstiften eines Gehäuses der Antriebseinrichtung angeordnet ist, von denen der obere Bewegungsfolgerstift auf einer Steuerkurve zum Absenken und der untere Bewegungsfolgerstift auf einer Steuerkurve der Steuerscheibe zum Anheben des Kupplungsgehäuses abrollt, ein zentraler Bewegungsfolgerstift des gehäuseseitigen Kugelstangenendes in einem nach vorne schräg abfallenden Führungsschlitz der Steuerscheibe abläuft und dem Kupplungsgehäuse außerdem in Vertikalschlitzen geführte Bewegungsfolgerstifte zugeordnet sind. Die lineare Verstellbewegung der Antriebseinrichtung, die sich hierbei in ihrer Lagerung in dem Antriebsgehäuse in der vertikalen Ebene geringfügig in taumelnder Bewegung verstellt, wird somit zwangsgesteuert und -geführt in den gewünschten Bewegungsablauf des Kupplungsgehäuses mit der Kugelstange umgewandelt.

Nach einer Ausgestaltung der Erfindung ist der zentrale Bewegungsfolgerstift auf einer das gehäuseseitige Kugelstangenende schellenartig umschließenden Manschette angeordnet, die gleichzeitig ein horizontales Achsglied aufweist, an das eine Verstellstange der Antriebseinrichtung zentrisch angelenkt ist. Die lineare Verstellbewegung wird mit direktem Angriff über die Manschette bzw. das Achsglied in die Kugelstange und damit das Kupplungsgehäuse eingeleitet.

In bevorzugter Ausführung ist die Manschette zwischen einen umfangsseitig ausgebildeten oberen und unteren Zahnkranzabschnitt des gehäuseseitigen Kugelstangenendes befestigt, wobei die Zahnkranzabschnitte im kämmenden Eingriff mit am Kupplungsgehäuse vorgesehenen Zahnstangen stehen. Es liegt damit ein kämmender Verzahnungseingriff in zwei übereinander liegenden Höhenebenen vor, was eine präzise überlagerte Drehbewegung der Kugelstange erlaubt, sobald die Steuerscheiben ihre entsprechende Position erreicht haben und die - an der Manschette beiden, zueinander diametral verlaufenden - Bewegungsfolgerstifte in den schrägen Führungsschlitzen ablaufen können.

Es empfiehlt sich, dass das Kupplungsgehäuse mit der bzw. den Steuerscheiben in ein Schutzgehäuse eingeschachtelt ist. Die für die Schwenk- und Drehbewegungen der Kugelstange erforderlichen Elemente sind somit nach außen geschützt eingekammert, vorzugsweise mit außerdem einer Abdichtung, z.B. durch einen Faltenbalg, des verschwenkbaren Kupplungsgehäuses zum Antriebsgehäuse.

Bei einer solchen ineinander geschachtelten Bauweise lässt sich vorteilhaft ein für die Kugelstange ein Drehlager bereitstellender Block linearbeweglich im Boden des Schutzgehäuses anordnen. Für die Kugelstange ergibt sich dadurch eine zusätzliche Führung während der Bewegungsabläufe.

In vorteilhafter und einfacher Weise lassen sich das gehäuseseitige Kugelstangen -ende und ein fensterartiges Rahmenteil des Antriebsgehäuses mit in der Betriebsstellung der Kugelstange ineinander greifenden Formschlusskonturen, vorzugsweise in Querträgern des Rahmenteils angeordnete Kugeln, denen im Kugelstangenende oberhalb und unterhalb der Manschette Kugelkalotten zugeordnet sind, ausbilden. Damit werden beim Rückhub der Verstellstange bzw. -spindel der Antriebseinrichtung die Formschlusskonturen in der Betriebsstellung der Kugeistange selbsttätig ohne weiteres miteinander verriegelt, nämlich die Kugelkalotten über bzw. auf die ihnen gegenüberliegenden Kugeln gezogen.

Weitere Merkmale und Einzelheiten der Erfindung ergeben sich aus den Ansprüchen und der nachfolgenden Beschreibung eines in den Zeichnungen dargestellten Ausführungsbeispiels der Erfindung. Es zeigen:
- Figur 1: eine an einem Querträger zur Verbindung mit einem nicht dargestell ten Kraftfahrzeug befestigte Anhängekupplung in einer perspektivischen Ansicht von vorne mit in der Betriebsstellung befindlicher Kugelstange;
- Figur 2: den Gegenstand der Figur 1 in einer perspektivischen Draufsicht, von der Rückseite des Querträgers her gesehen;
- Figur 3: den Gegenstand der Figur 1 in einer Draufsicht;
- Figur 4: in einer perspektivischen Vorderansicht den Gegenstand der Figur 1 mit der in ihrer Ruhestellung befindlichen Kugelstange;

- Figur 5: den Gegenstand der Figur 4 in einer perspektivischen Draufsicht von der Rückseite des Querträgers her gesehen;
- Figur 6: in einer perspektivischen Gesamtansicht von vorne die Anhängevorrichtung als Einzelheit ohne Querträger dargestellt;
- Figur 7: den Gegenstand der Figur 6 in einer Draufsicht; und in den folgenden Figuren verschiedene Betriebsphasen zum Verstellen der Kugelstange aus ihrer Betriebsstellung (Figuren 1 bis 3 sowie 6 und 7) durch Absenken und Anheben in ihre Ruhestellung (Figuren 4 und 5), in allen Fällen ohne Querträger dargestellt, mit in

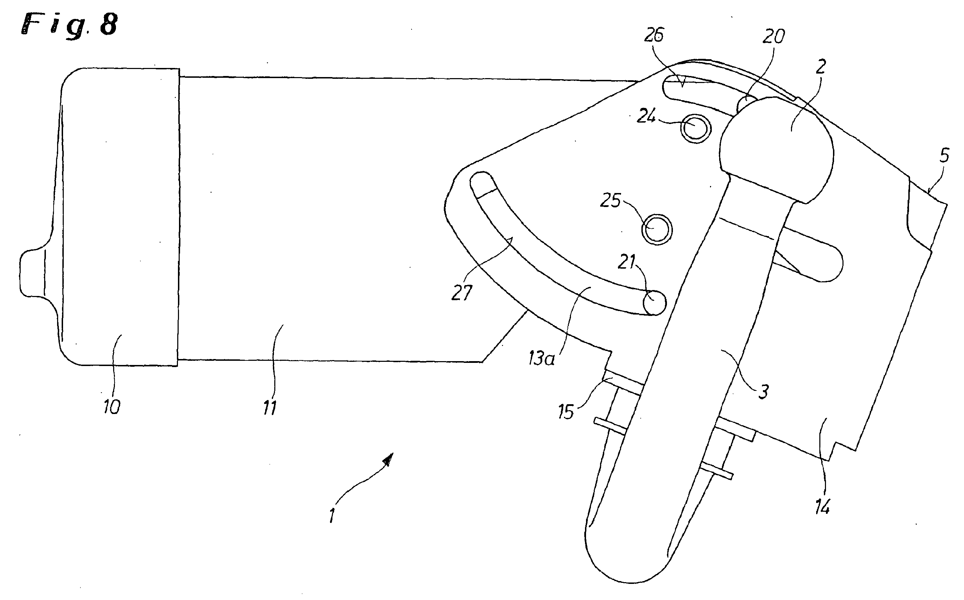

- Figur 8: einer Zwischenstellung nach Einleitung einer ersten Schwenkbewegung;
- Figur 9: den Gegenstand der Figur 8 in einer Draufsicht, ohne Schutzgehäuse und ohne Antriebsgehäuse dargestellt;
- Figur 10: den Gegenstand der Figur 9 in einer perspektivischen Vorderansicht;
- Figur 11: den Gegenstand der Figur 10 ohne Kupplungsgehäuse und Steuerscheiben dargestellt;
- Figur 12: den Gegenstand der Figur 8 in der Endstellung der ersten Schwenkbewegung und der Anfangsstellung der zweiten Schwenkbewegung;
- Figur 13: den Gegenstand der Figur 12 in perspektivischer Vorderansicht, ohne Schutzgehäuse und ohne Antriebsgehäuse dargestellt;

- Figur 14: den Gegenstand der Figur 13 ohne Steuerscheiben dargestellt;
- Figur 15: den Gegenstand der Figur 12 in einer Zwischenstellung nach eingeleiteter zweiter Schwenkbewegung;
- Figur 16: den Gegenstand der Figur 15 in einer perspektivischen Draufsicht;
- Figur 17: den Gegenstand der Figur 15, ohne Schutzgehäuse und ohne Antriebsgehäuse dargestellt;
- Figur 18: den Gegenstand der Figur 17, außerdem ohne Kupplungsgehäuse und Steuerscheiben dargestellt;
- Figur 19: den Gegenstand der Figur 8 in der Endstellung der zweiten Schwenkbewegung bzw. Anfangsstellung der dritten Schwenkbewegung;
- Figur 20: den Gegenstand der Figur 19, ohne Schutzgehäuse und ohne Antriebsgehäuse dargestellt;
- Figur 21: den Gegenstand der Figur 19 in einer Zwischenstellung nach eingeleiteter dritter Schwenkbewegung,
- Figur 22: den Gegenstand der Figur 21 in einer Draufsicht;
- Figur 23: den Gegenstand der Figur 21 ohne Schutzgehäuse und ohne Antriebsgehäuse dargestellt;
- Figur 24: den Gegenstand der Figur 21, außerdem ohne Kupplungsgehäuse und ohne Steuerscheiben dargestellt;

- Figur 25: den Gegenstand der Figur 8 in der Endstellung der dritten Schwenkbewegung bzw. mit der angehobenen Kugelstange in ihrer Ruhestellung;
- Figur 26: den Gegenstand der Figur 25, ohne Schutzgehäuse und ohne Antriebsgehäuse dargestellt;
- Figur 27: den Gegenstand der Figur 26, außerdem ohne Kupplungsgehäuse und ohne Steuerscheiben dargestellt.

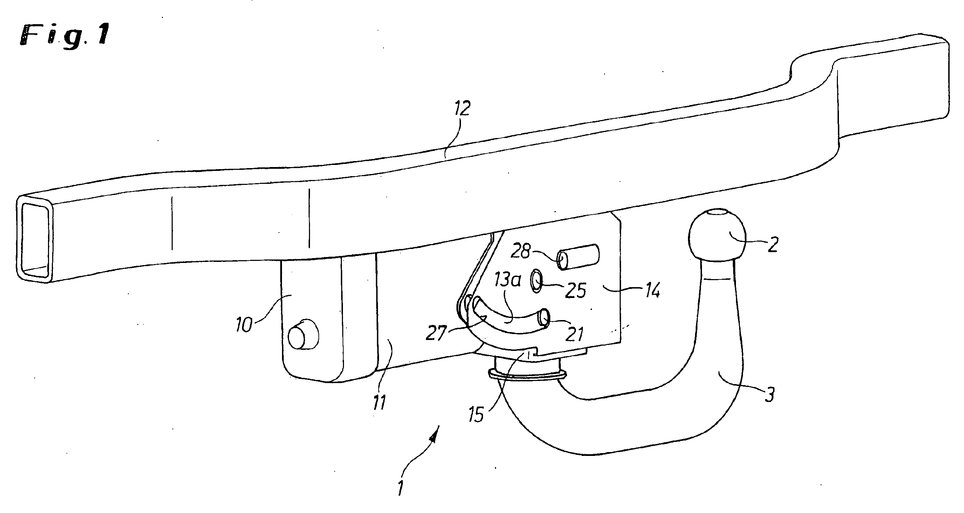

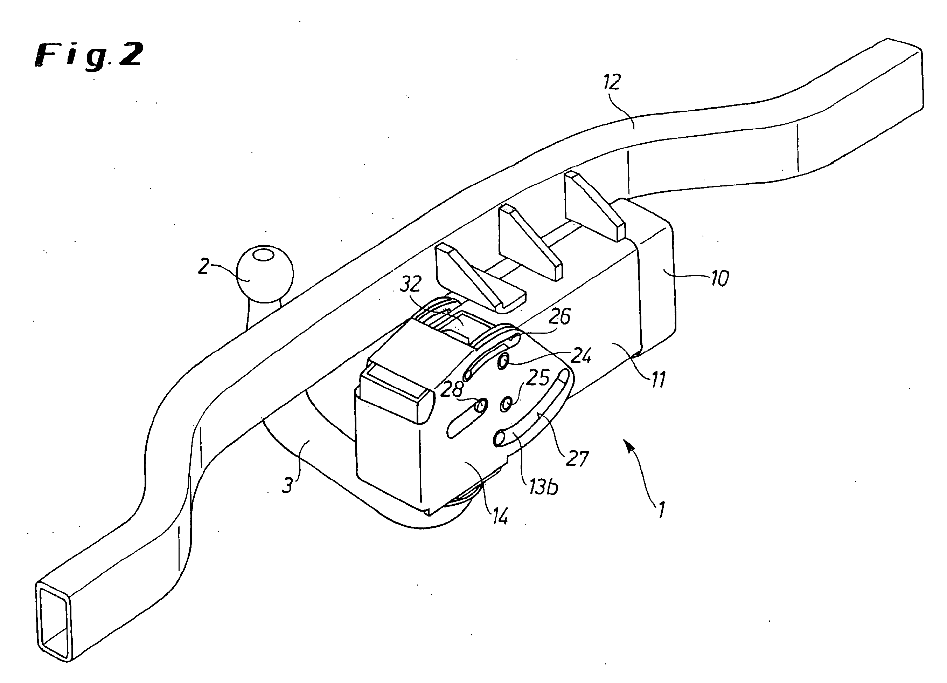

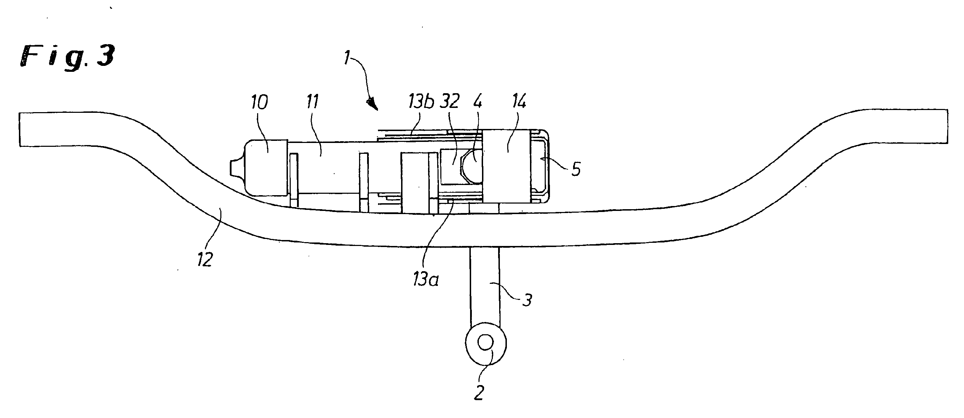

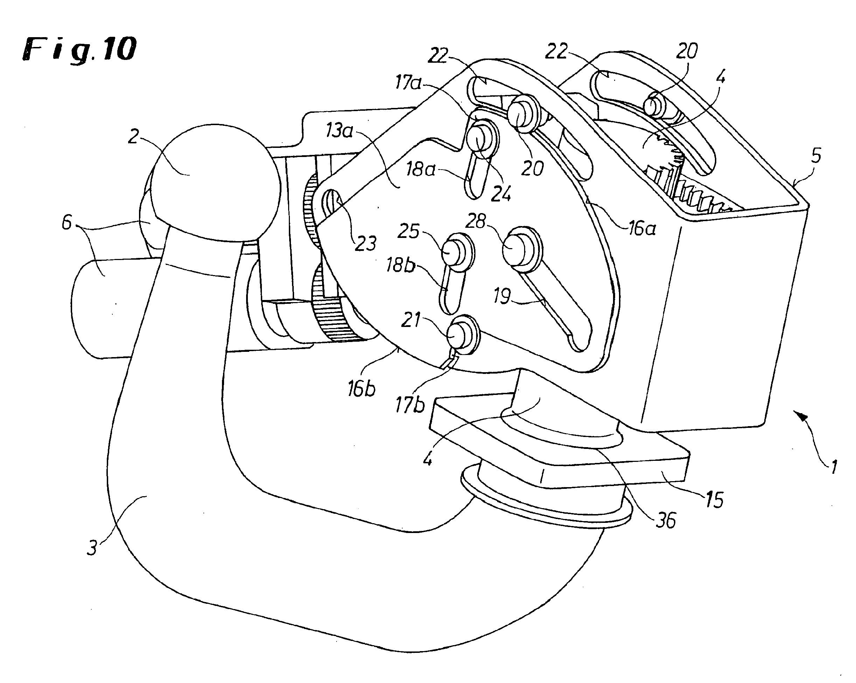

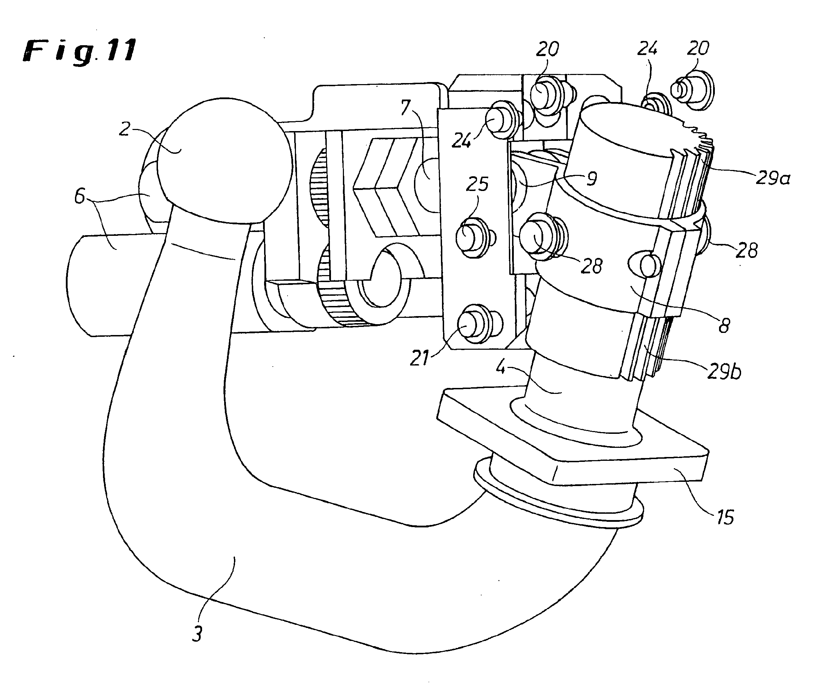

Eine in den Figuren 1 bis 3 dargestellte Anhängevorrichtung 1 befindet sich mit ihrer an ihrem freien Ende einen Kugelkopf bzw. eine Kupplungskugel 2 tragenden, gekröpften Kugelstange 3 in der Betriebsstellung, in der sich die Kugelstange 3 in Fahrzeuglängsrichtung erstreckt. Das andere gehäuseseitige Kugelstangenende 4 (vgl. z.B. Figur 11) wird von einem verschwenkbaren Kupplungsgehäuse 5 umschlossen (vgl. z.B. Figur 10). Zum Verschwenken des Kupplungsgehäuses 5 und damit der Kugelstange 3 greift im Ausführungsbeispiel ein elektrischer Antriebsmotor 6 über eine Verstellstange 7 an das obere, gehäuseseitige Kugelstangenende 4 an, wozu dieses mit einer schellenartigen Manschette 8 und einem zur Verbindung mit der Verstellstange 7 horizontalen Achsglied 9 versehen ist (vgl. Figur 11). Der Antriebsmotor 6 wird von einem endseitig mit einer Kappe 10 verschlossenen, im Querschnitt rechteckigen Antriebsgehäuse 11, einfachstenfalls ein Vierkant-Rohr, aufgenommen. Über das Antriebsgehäuse 11 ist die Anhängevorrichtung 1 zur Befestigung an ein nicht dargestelltes Kraftfahrzeug bzw. Zugfahrzeug mit einem Querträger 12 verbunden (vgl. Figur 2).

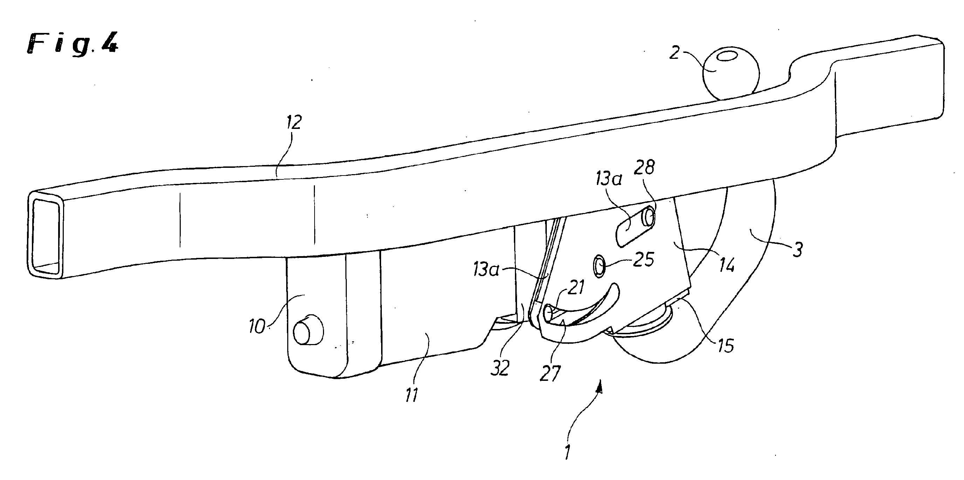

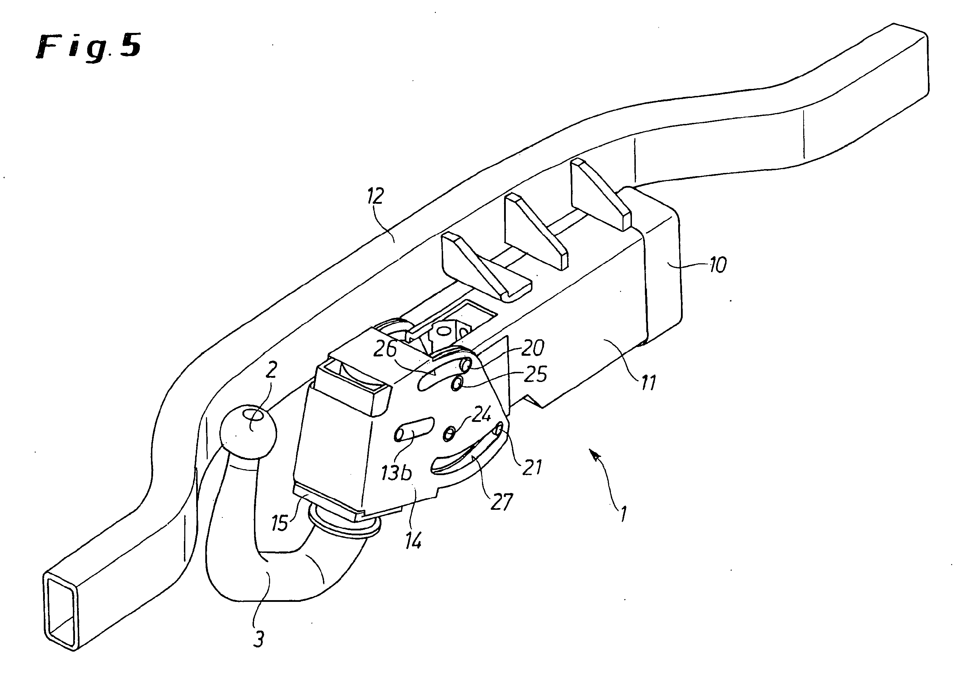

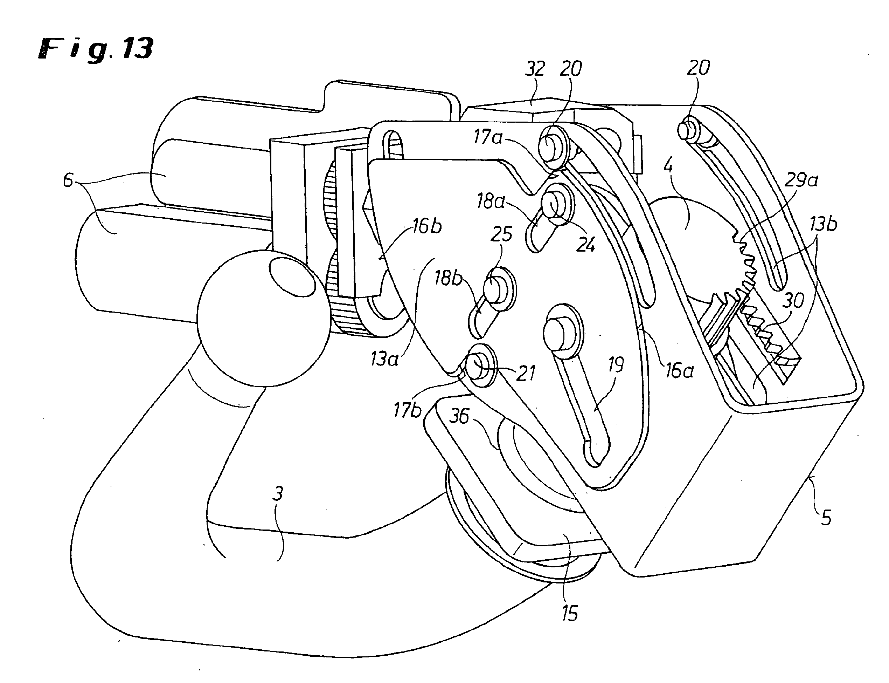

Das an seinen beiden gegenüberliegenden Längswänden außen jeweils eine Steuerscheibe 13a bzw. 13b aufweisende Kupplungsgehäuse 5 (vgl. Figur 13) wird von einem über diese Baueinheit geschachtelten Schutzgehäuse 14 eingekammert. In dem Boden des Schutzgehäuses 14 ist ein linearbeweglicher Block 15 angeordnet, der für die Kugelstange 3 ein Drehlager 36 bereitstellt (vgl. z.B. Figur 10). Hingegen stellen die Figuren 4 und 5 die in ihre Ruhestellung durch Absenken und Anheben beim Verschwenken des Kupplungsgehäuses verstellte Kugelstange 3 dar, in der sich diese quer zur Fahrzeuglängsachse hinter einer nicht gezeigten Fahrzeugschürze, Stoßfänger oder dergleichen befindet.

Zum Verschwenken der Kugelstange 3 von der einen in die andere Stellung, und damit zunächst Absenken und im letzten Stadium wieder Anheben des Kupplungsgehäuses 5 samt Steuerscheiben 13a, 13b und dem diese Einheit einschachtelnden Schutzgehäuse 14 in einem in der vertikalen Ebene liegenden Bewegungsablauf, sind die Steuerscheiben 13a, 13b an ihrem Außenumfang einander etwa diagonal gegenüber liegend mit einerseits einer Steuerkurve 16a für die Absenkbewegung und andererseits einer Steuerkurve 16b für die Anhebbewegung ausgebildet. Der Steuerkurve 16a nachgeschaltet bzw. der Steuerkurve 16b vorgeschaltet sind im wesentlichen rechtwinklig dazu verlaufende Endabschnitte 17a, 17b vorgesehen (vgl. die Figuren 10 und 13). Außerdem sind die Steuerscheiben 13a, 13b mit im Abstand übereinander angeordneten Vertikalschlitzen 18a, 18b und einem nach vorne schräg abfallenden Führungsschlitz 19 versehen.

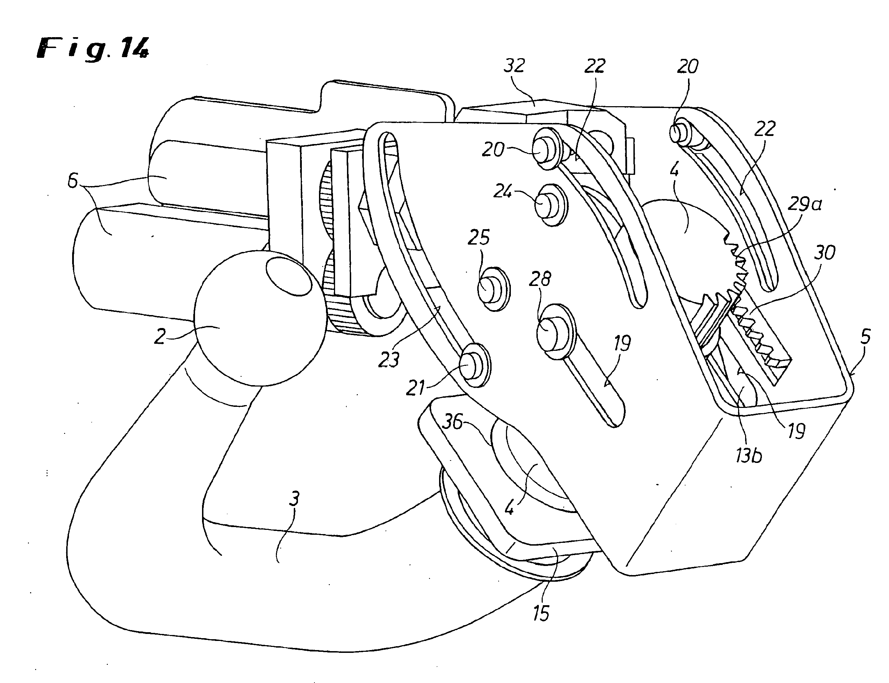

Der Absenk- bzw. Steuerkurve 16a und der Anheb- bzw. Steuerkurve 16b sind am Antriebsgehäuse 11 stationäre Bewegungsfolgerstifte 20 bzw. 21 zugeordnet, von denen die oberen, auf der Absenk-Steuerkurve 16a ablaufenden Bewegungsfolgerstifte 20 durch im oberen Randbereich der beiden Längswände des Kupplungsgehäuses 5 ausgebildete Bogenschlitze 22 hindurchtauchen. Die den Anheb-Steuerkurven 16b zugeordneten Bewegungsfolgerstifte 21 werden in entsprechenden Bogenschlitzen 23 im unteren Randbereich der Längswände des Kupplungsgehäuses 5 geführt (vgl. Figur 14). Wie sich beispielsweise der Figur 10 weiter entnehmen lässt, sind den Vertikalschlitzen 18a, 18b der Steuerscheiben 13a bzw. 13b im bzw. am Kupplungsgehäuse 5 Bewegungsfolgerstifte 24 und 25 angeordnet, die nach dem Anbringen des Schutzgehäuses 14 von in dessen Seitenwänden ausgebildeten Einprägungen aufgenommen werden, wie auch für die antriebsgehäusefesten oberen und unteren Bewegungsfolgerstifte 20 bzw. 21 in den Seitenwänden des Schutzgehäuses 14 Bogenschlitze 26 bzw. 27 vorhanden sind (vgl. beispw. Figur 5). Den schräg abfallenden Führungsschlitzen 19 der Steuerscheiben 13a, 13b und komplementär dazu des Kupplungsgehäuses 5 (vgl. Figur 14) sind Bewegungsfolgerstifte 28 zugeordnet, die zueinander diametral verlaufend zentral an der das obere, gehäuseseitige Kugelstangenende 4 umschließenden Manschette 8 vorgesehen sind (vgl. beispw. Figur 11).

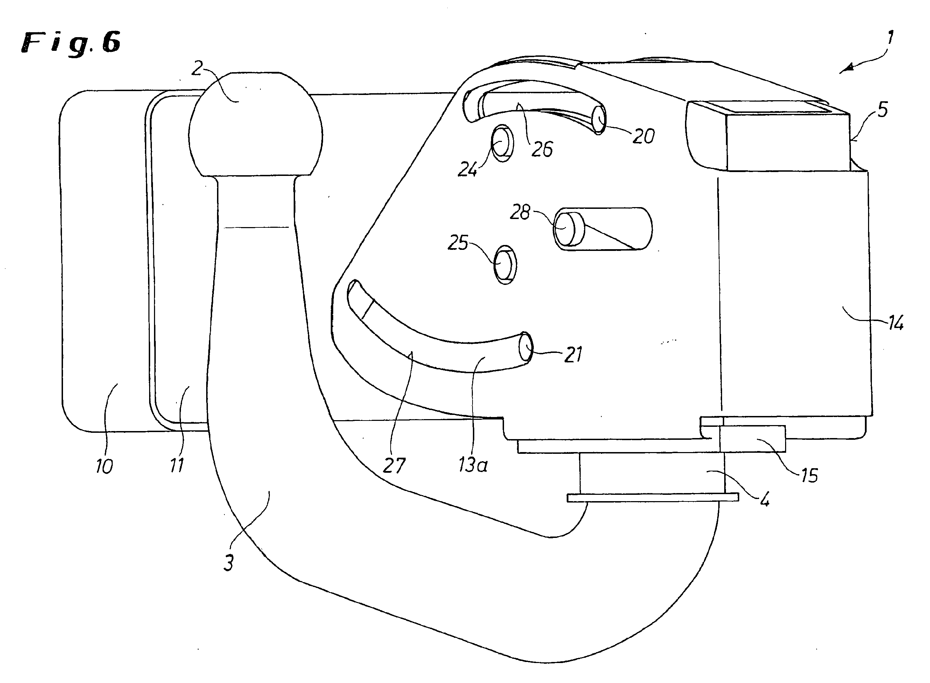

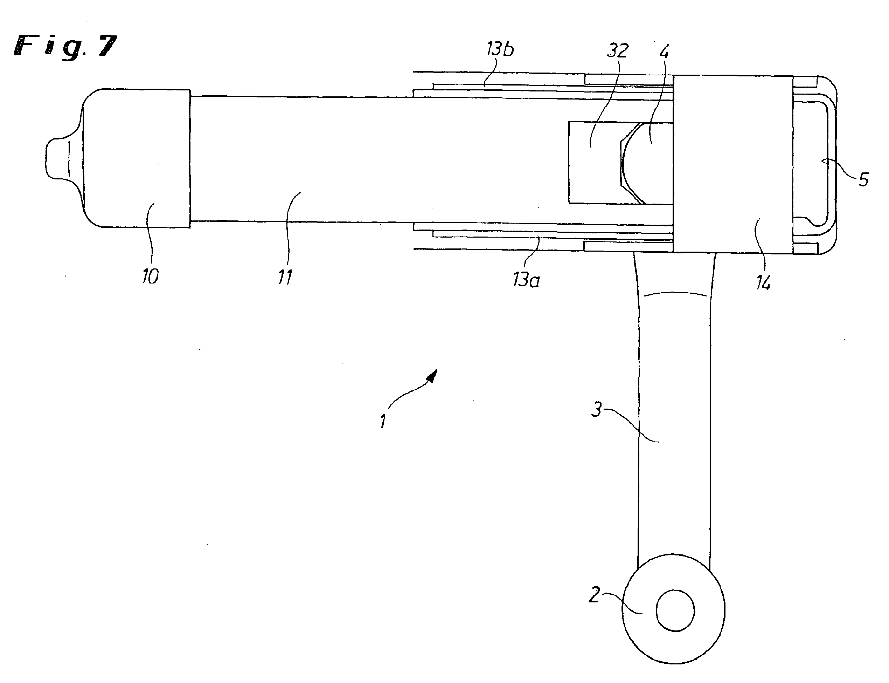

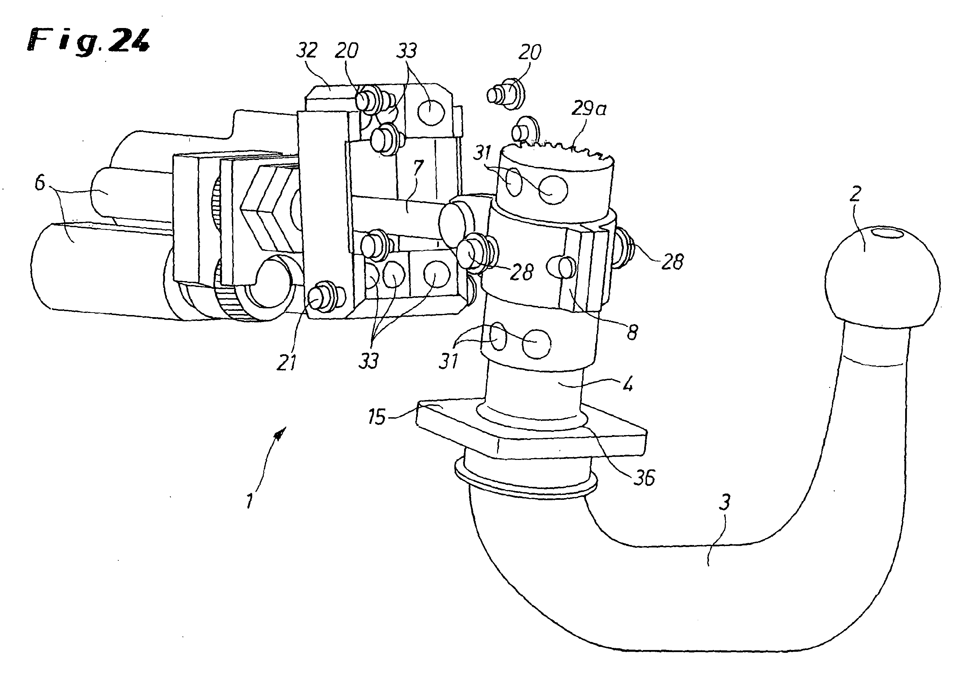

Zur Überlagerung des vertikalen Schwenkverlaufs beim Absenken und Anheben mit einer Drehbewegung der Kugelstange 3 ist deren oberes, gehäuseseitiges Kugelstangenende 4, wie sich deutlich in insbesondere aus Figur 11 entnehmen läßt, ober- und unterhalb der befestigten Manschette 8 über einen Teilbereich des Umfangs mit einem oberen und einem unteren Zahnkranzabschnitt 29a bzw. 29b ausgebildet, denen an den Innenseiten der Längswände des Kupplungsgehäuses 5 entsprechende Zahnstangen 30 zugeordnet sind, mit denen die Zahnkranzabschnitte 29a, 29b kämmen. Den Zahnkranzabschnitten 29a, 29b gegenüberliegend sind in dem gehäuseseitigen Kugelstangenende 4 Kugelkalotten 31 ausgebildet, denen in einem fensterartigen, dem Antriebsgehäuse 11 zur Schwenkeinheit hin nachgeschalteten, fensterartigen Rahmenteil 32 (vgl. beispw. Figur 7) in dessen Querträgern vorgesehene Kugeln 33 zugeordnet sind (vgl. Figur 24). In der Betriebsstellung der Anhängevorrichtung 1 bzw. der Kugelstange 3 (vgl. die Figuren 1 bis 3 sowie 6 und 7) stellen die bei zurückgezogener Verstellstange 7 des Antriebsmotors 6 in die Kugelkalotten 31 eingreifenden Kugeln 33 eine die Anhängevorrichtung entlastende Formschlussverbindung her.

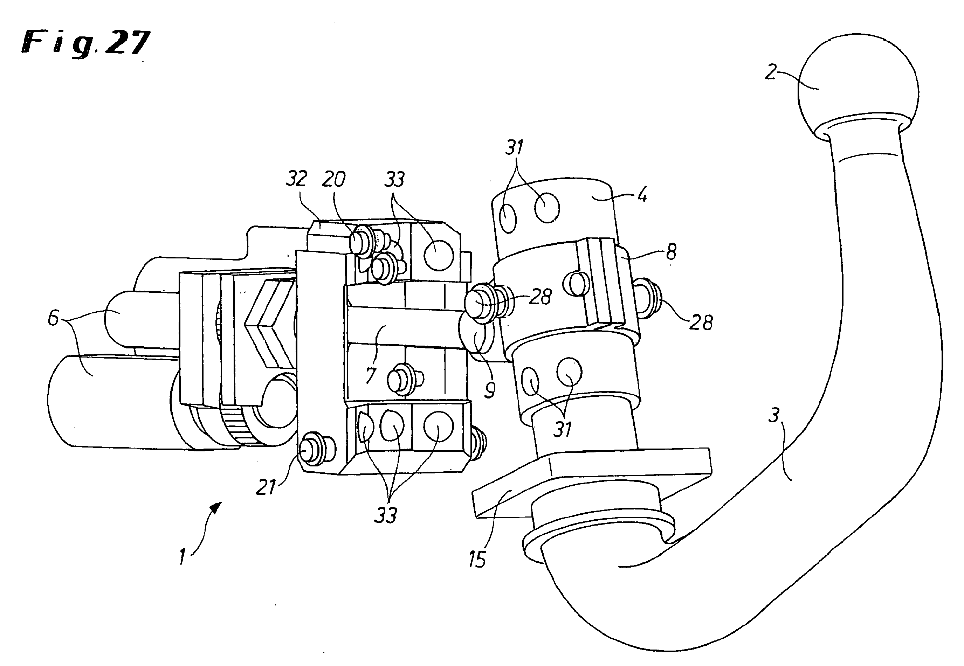

Zum Verschwenken der Kugelstange 3 der Anhängevorrichtung 1 aus ihrer Betriebsstellung (Figuren 1 bis 3 sowie 6 und 7) in ihre Ruhestellung (Figuren 4 und 5 sowie 25 bis 27) wird der Antriebsmotor 6 zur Schwenkeinheit (Schutzgehäuse 14, Kupplungsgehäuse 5 mit den Steuerscheiben 13a, 13b und der in dem Kupplungsgehäuse 5 mit ihrem gehäuseseitigen Kugelstangenende 4 aufgenommenen Kugelstange 3) beaufschlagt. Die über das Achsglied 9 der Manschette 8 zentrisch an das gehäuseseitige Kugelstangenende 4 angreifende Stellstange 7 senkt die Gehäuseeinheit in eine erste Schwenkstellung ab, in der die Gehäuseeinheit mit der Kugelstange 3 in der vertikalen Ebene eine erste Schräglage einnimmt.

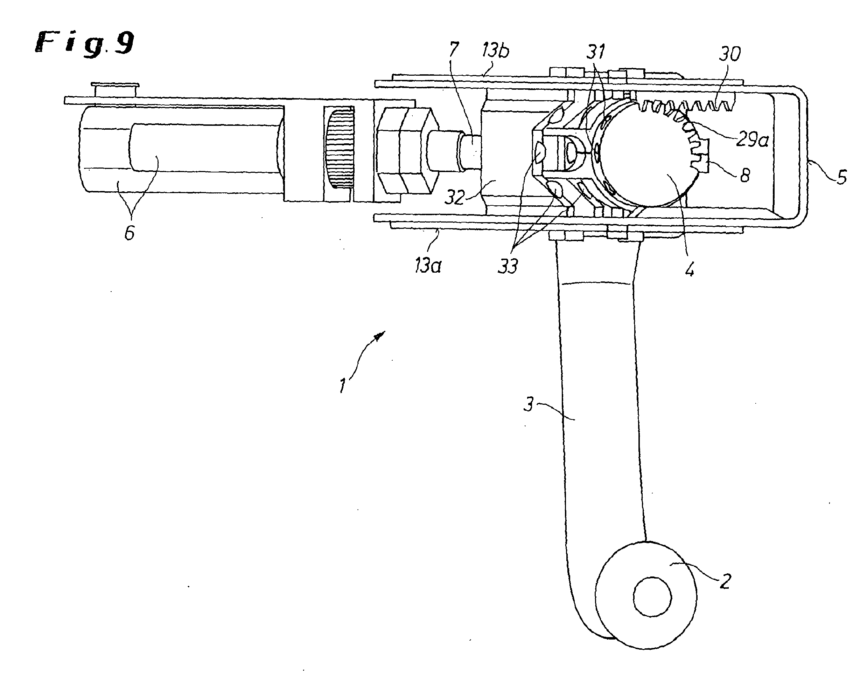

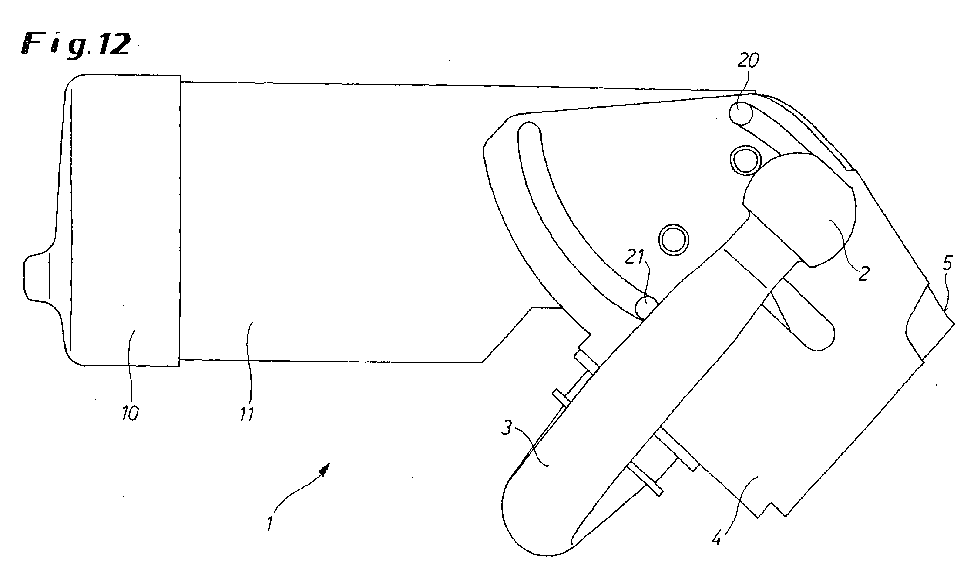

Die Figuren 9 bis 11 zeigen eine Zwischenstellung, in der sich die oberen Bewegungsfolgerstifte 20 bereits zu einem großen Teil auf den Steuerkurven 16a (vgl. Figur 10) abgerollt und dabei die Gehäuseeinheit niedergedrückt haben. Die Figuren 12 bis 14 zeigen die Endstellung dieser ersten Schwenkbewegung, in der die oberen Bewegungsverfolgerstifte 20 die Steuerkurven 16a verlassen haben (vgl. Figur 13), womit sogleich die zweite Schwenkbewegung eingeleitet wird, an deren Ende die Kugelstange 3 eine noch größere räumliche Schräglage einnimmt.

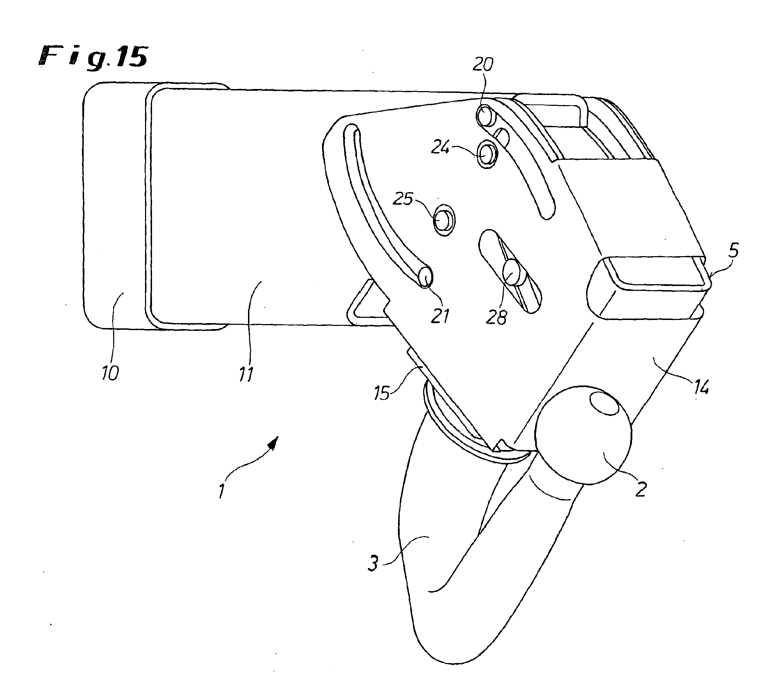

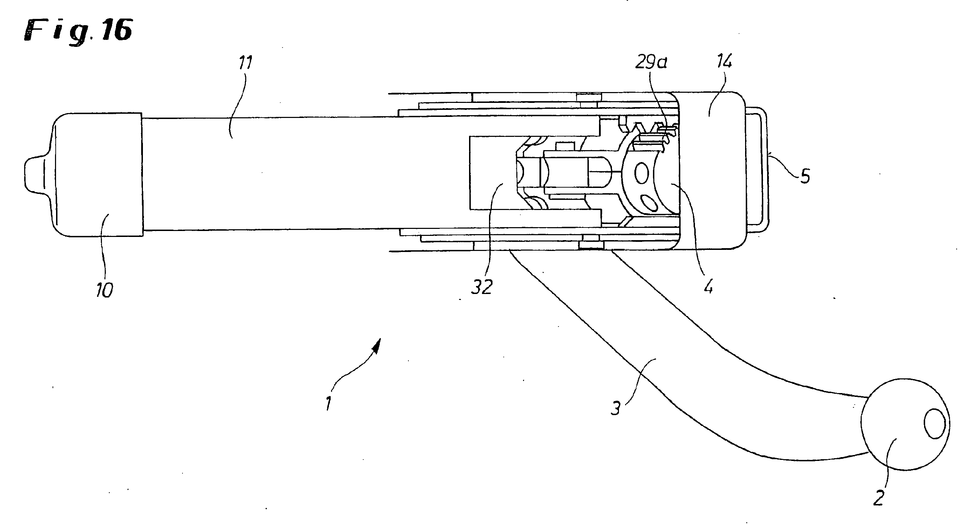

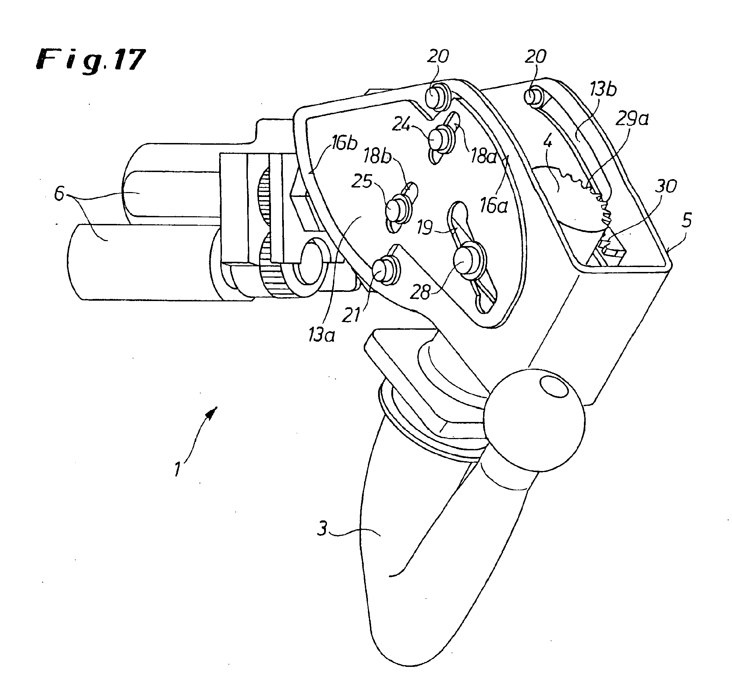

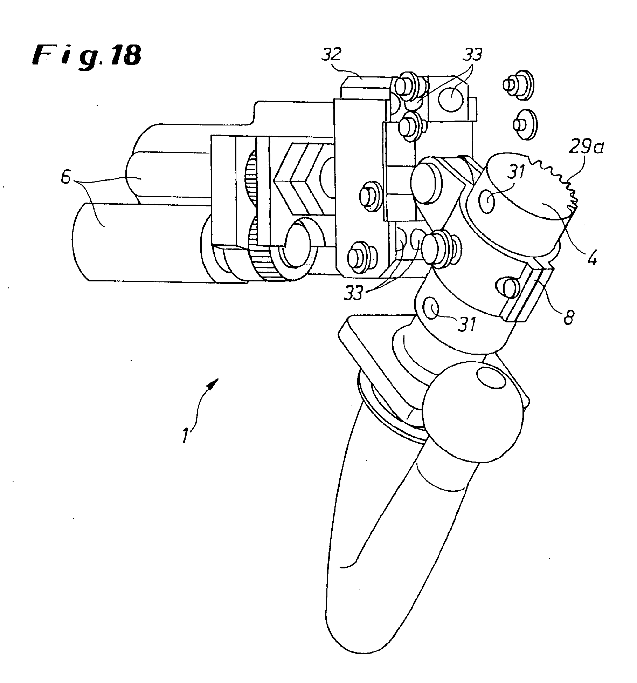

Die Figuren 15 bis 18 zeigen eine Zwischenstellung dieser zweiten Schwenkbewegung, die einhergeht mit einer überlagerten Drehbewegung der Kugelstange 3 um eine durch das Kugelstangenende 4 laufende vertikale Drehachse. Dies wird dadurch erreicht, dass sich die Zahnkranzabschnitte 29a, 29b auf den Zahnstangen 30 abwälzen, wobei sich gleichzeitig die Bewegungsfolgerstifte 24, 25 in den Vertikalschlitzen 18, 18b und die manschettenseitigen, zentralen Bewegungsfolgerstifte 28 in den schräg abfallenden Führungsschlitzen 19 verlagert haben. Der untere, antriebsfeste Bewegungsfolgerstift 21 hat sich der Anheb-Steuerkurve 16b der Steuerscheiben 13a, 13b genähert (vgl. Figur 17).

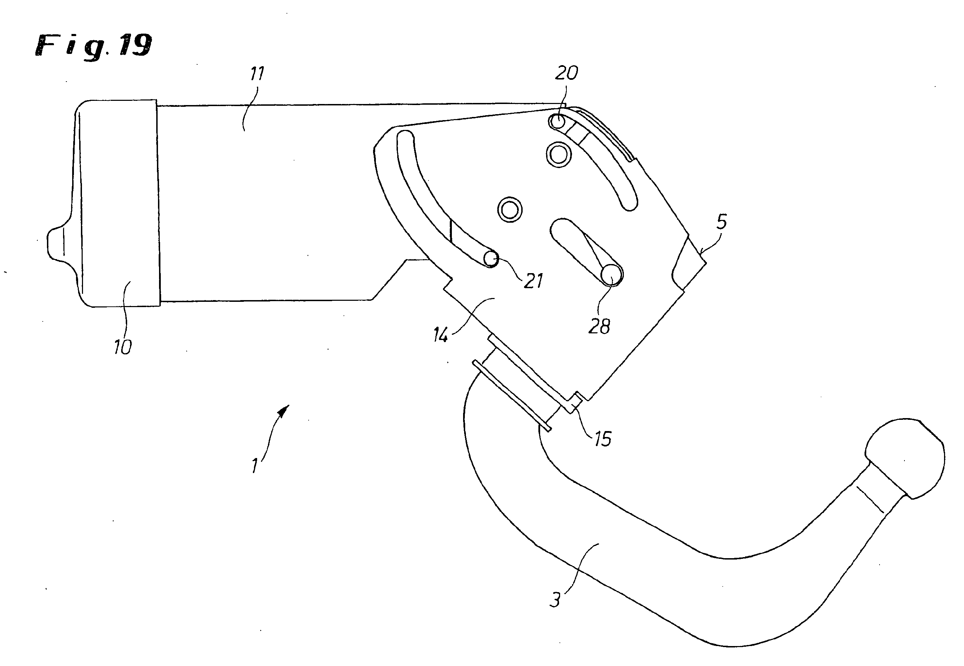

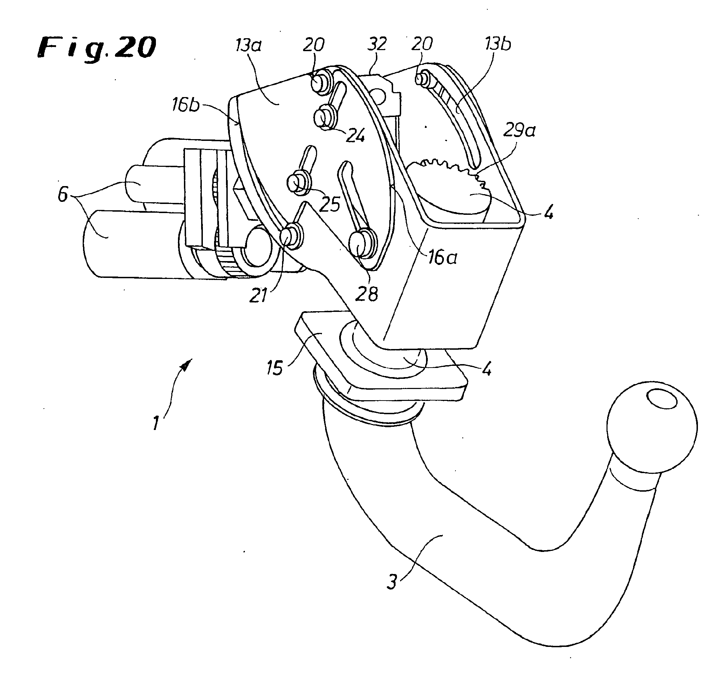

Die Endstellung der zweiten Schwenkbewegung mit gleichzeitiger Drehung der Kugelstange 3 und die Anfangsstellung zur dritten Schwenkbewegung, in deren Verlauf die Gehäuseeinheit mit der Kugelstange zur Einnahme der Ruhestellung angehoben wird, zeigen die Figuren 19 und 20. Der Figur 20 läßt sich entnehmen, dass sich die Zahnkranzabschnitte 29a, 29b (nicht zu sehen) in ihre Endposition auf den Zahnstangen 30 abgewälzt haben und die Bewegungsfolgerstifte 24, 25 und 28 sowie auch die antriebsgehäuseseitigen, oberen Bewegungsfolgerstifte 20 ihre Endpositionen eingenommen haben, während die antriebsgehäuseseitigen unteren Bewegungsfolgerstifte 21 beginnen, auf die Steuerkurven 16b zum Anheben der Gehäuseeinheit mit Kugelstange 3 aufzulaufen.

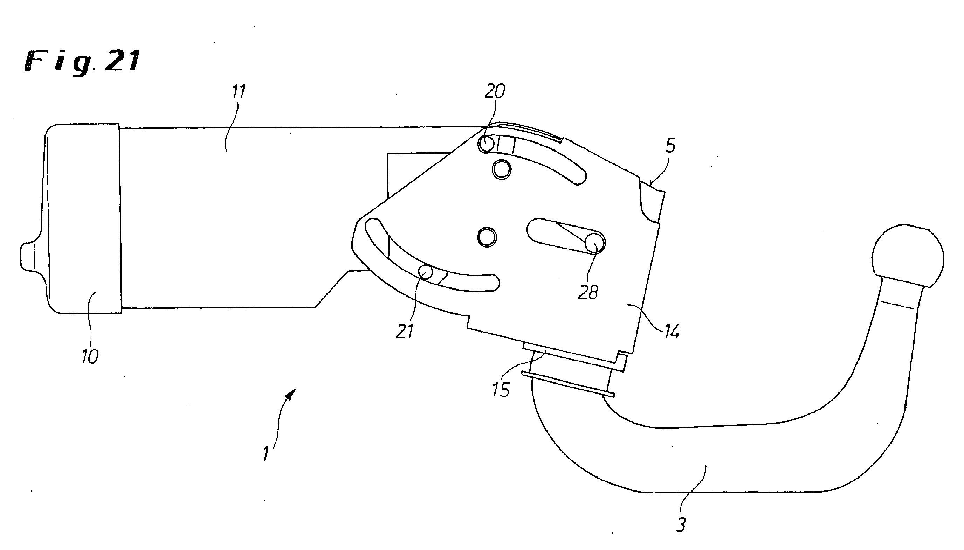

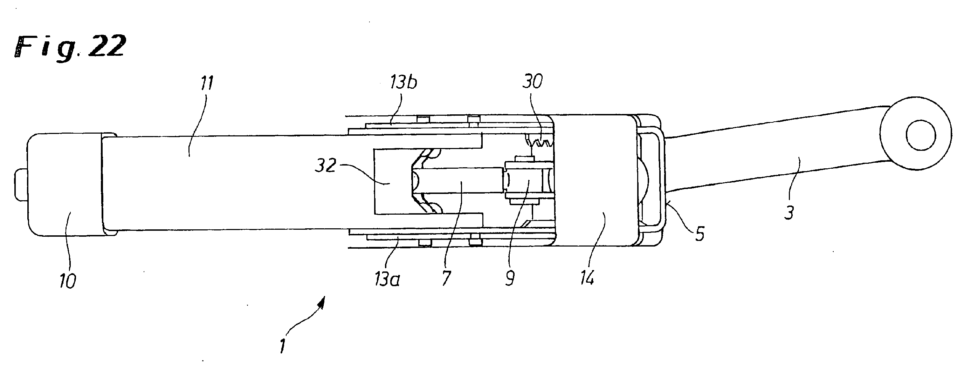

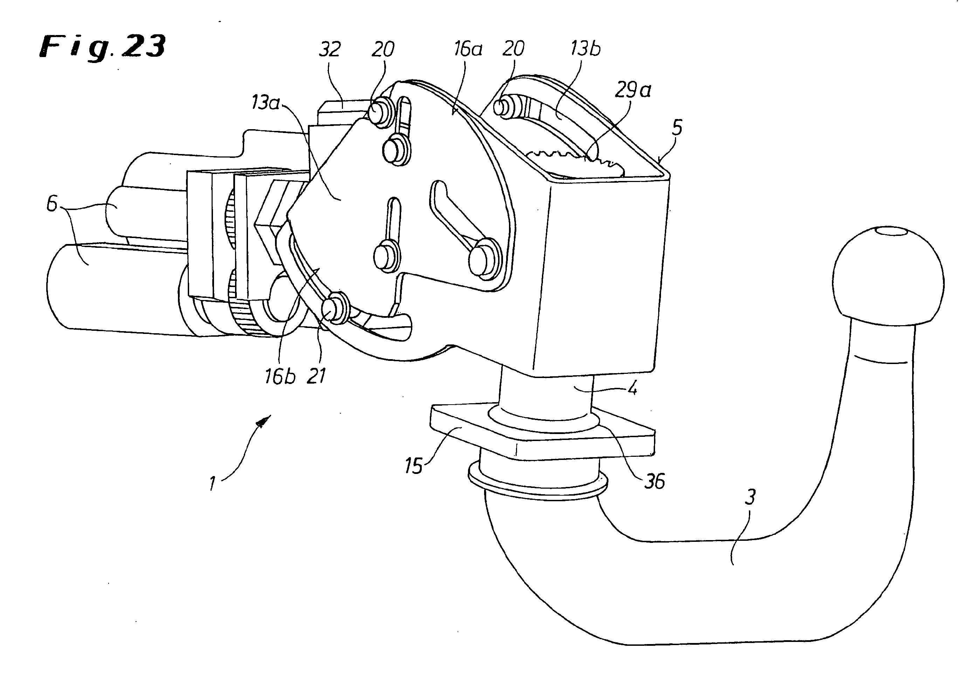

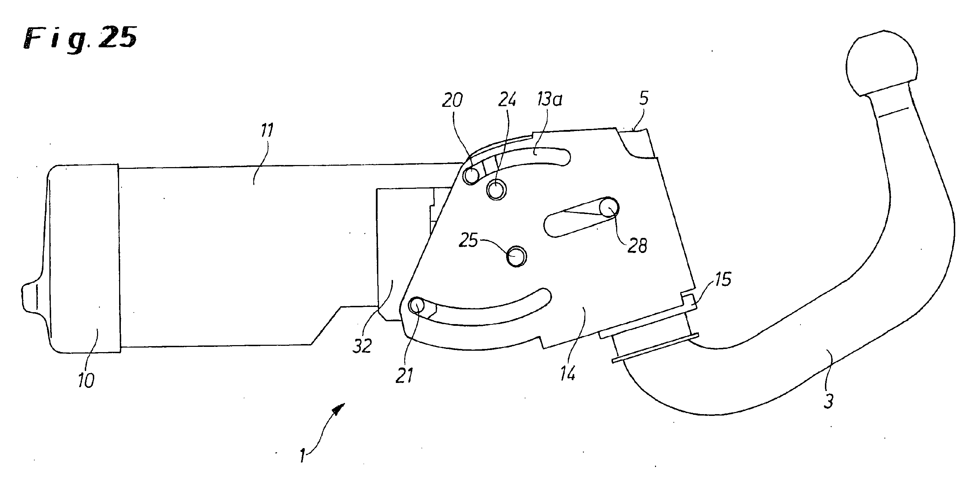

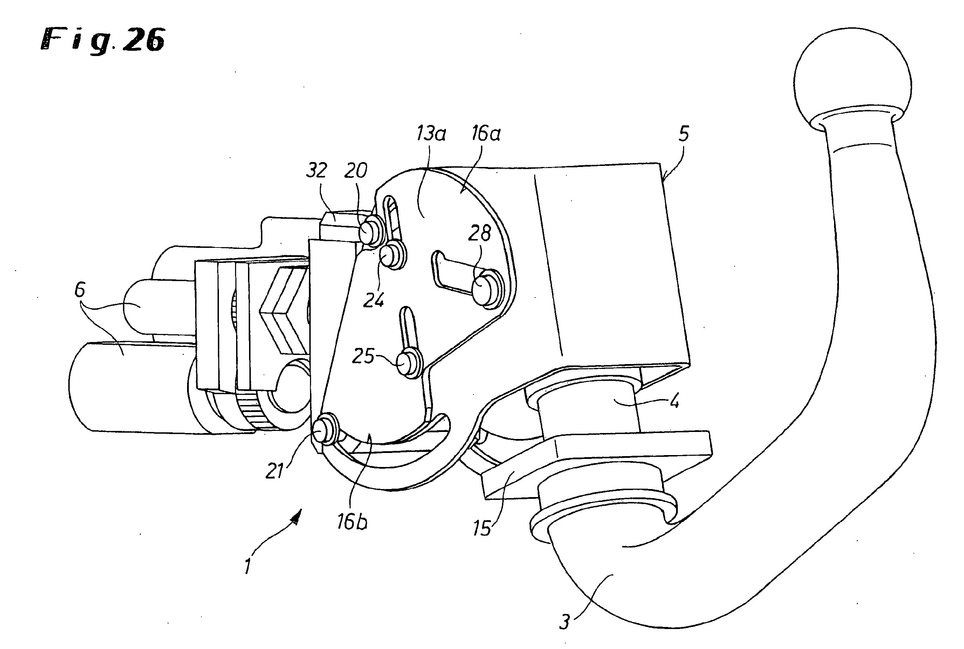

In den Figuren 21 bis 24 wird eine Zwischenstellung der dritten Schwenk- bzw. Anhebebewegung dargestellt, die durch das Ablaufen der unteren Bewegungsfolgerstifte 21 auf den Anheb-Steuerkurven 16b der beidseitigen Steuerscheiben 13a, 13b bewirkt wird. In der Folge laufen nur noch die unteren Bewegungsfolgerstifte 21 auf den Steuerkurven 16b ab, bis die Gehäuseeinheit mit der Kugelstange 3 ihre Endstellung gemäß den Figuren 25 bis 27 erreicht hat, in der sich die Bewegungsfolgerstifte 21 auf dem höchsten Punkt der Steuerkurven 16b befinden (vgl. Figur 26). Wenn die Anhängevorrichtung 1 dann erneut zum Einsatz kommen soll, läuft der Schwenkvorgang von der Ruhestellung in die Betriebs- bzw. Arbeitsstellung (Figuren 1 bis 3 sowie 6 und 7) exakt umgekehrt wie zuvor beschrieben ab.

## Patentansprüche

1. Anhängekupplung (1) für Kraftfahrzeuge, die über einen Querträger (12) fahrzeugfest angeordnet ist, umfassend eine an ihrem freien Ende eine Kupplungskugel (2) tragende Kugelstange (3), die in einem verschwenkbaren Kupplungsgehäuse (5) vorgesehen und mittels einer Antriebseinrichtung (6) von einer Betriebsstellung in eine Ruhestellung und umgekehrt verstellbar ist und während dieser Verstellung der Schwenkbewegung eine Drehbewegung der Kugelstange (3) überlagert wird, deren gehäuseseitiges Kugelstangenende (4) dazu getrieblich mit der Innenseite des Kupplungsgehäuses (5) gekoppelt ist,
**dadurch gekennzeichnet,**
**daß** an zumindest einer Längswand des schwenkbaren Kupplungsgehäuses (5) eine Steuerscheibe (13a; 13b) angeordnet ist, die mit Steuerkurven (16a, 16b) und Führungsschlitzen (18a, 18b; 19) zum sukzessiven Absenken und Anheben des Kupplungsgehäuses (5) bei dessen Schwenkbewegung sowie gleichzeitiger, positionsabhängiger Einleitung der Drehbewegung der Kugelstange (3) ausgebildet ist, wobei den Steuerkurven (16a; 16b) und den Führungsschlitzen (18a, 18b; 19) der sich mit dem verschwenkenden Kupplungsgehäuse (5) verlagernden Steuerscheibe (13a; 13b) Bewegungsfolgerstifte (20, 21; 24,25, 28) zugeordnet sind.

2. Anhängekupplung nach Anspruch 1,
**dadurch gekennzeichnet,**
**daß** das Kupplungsgehäuse (5) mit einem oberen und einem unteren Bogenschlitz (22 bzw. 23) auf Bewegungsfolgerstiften (20 bzw. 21) eines Gehäuses (11) der Antriebseinrichtung (6) angeordnet ist, von denen der obere Bewegungsfolgerstift (20) auf einer Steuerkurve (16a) zum Absenken und der untere Bewegungsfolgerstift (21) auf einer Steuerkurve (16b) der Steuerscheibe (13a, 13b) zum Anheben des Kupplungsgehäuses (5) abrollt, ein zentraler Bewegungsfolgerstift (28) des gehäuseseitigen Kugelstangenendes (4) in einem nach vorne schräg abfallenden Führungsschlitz (19) der Steuerscheibe (13a, 13b) abläuft und dem Kupplungsgehäuse (5) außerdem in Vertikalschlitzen (18a, 18b) geführte Bewegungsfolgerstifte (24; 25) zugeordnet sind.

3. Anhängekupplung nach Anspruch 2,
**dadurch gekennzeichnet,**
**daß** der zentrale Bewegungsfolgerstift (28) auf einer das gehäuseseitige Kugelstangenende (4) schellenartig umschließenden Manschette (8) angeordnet ist, die gleichzeitig ein horizontales Achsglied (9) aufweist, an das eine Verstellstange (7) der Antriebseinrichtung (6) zentrisch angelenkt ist.

4. Anhängekupplung nach Anspruch 3,
**dadurch gekennzeichnet,**
**daß** die Manschette (8) zwischen einem umfangsseitig ausgebildeten oberen und unteren Zahnkranzabschnitt (29a bzw. 29b) des gehäuseseitigen Kugelstangenendes (4) befestigt ist, wobei die Zahnkranzabschnitte (29a, 29b) im kämmenden Eingriff mit am Kupplungsgehäuse (5) vorgesehenen Zahnstangen (30) stehen.

5. Anhängekupplung nach einem der Ansprüche 1 bis 4,
**dadurch gekennzeichnet,**
**daß** das Kupplungsgehäuse (5) mit der Steuerscheibe (13a; 13b) in ein Schutzgehäuse (14) eingeschachtelt ist.

6. Anhängekupplung nach Anspruch 1 und 5,
**dadurch gekennzeichnet,**
**daß** ein für die Kugelstange (3) ein Drehlager bereitstellender Block (15) linear beweglich im Boden des Schutzgehäuses (14) angeordnet ist).

7. Anhängekupplung nach einem der Ansprüche 1 bis 6.
**dadurch gekennzeichnet,**
**daß** das gehäuseseitige Kugelstangenende (4) und ein fensterartiges Rahmenteil (32) des Antriebsgehäuses (11) mit in der Betriebsstellung der Kugelstange (3) ineinander greifenden Formschlusskonturen (31; 33) ausgebildet sind.

8. Anhängevorrichtung nach Anspruch 3 und 7,
**gekennzeichnet durch**
in Querträgern des Rahmenteils (32) angeordnete Kugeln (33), denen im Kugelstangenende (4) oberhalb und unterhalb der Manschette (8) Kugelkalotten (31) zugeordnet sind.

## Claims

1. A trailer coupling (1) for motor vehicles which is arranged fixed to the vehicle via a cross member (12), comprising a coupling ball bar (3), carrying at its free end a coupling ball (2), which is provided in a pivotable coupling housing (5) and which may be adjusted by means of a drive device (6) from an operating position into a resting position and vice versa, and during this adjustment the pivoting movement is overlaid by a rotational movement of the coupling ball bar (3), the coupling ball bar end (4) thereof on the housing side being coupled for this purpose in drive terms to the inside of the coupling housing (5), **characterised in that** on at least one longitudinal wall of the pivotable coupling housing (5) a control plate (13a; 13b) is arranged which is configured with control cams (16a, 16b) and guide slots (18a, 18b; 19) for successively lowering and raising the coupling housing (5) during the pivoting movement thereof as well as simultaneous, position-dependent initiation of the rotational movement of the coupling ball bar (3), movement follow-up pins (20, 21; 24, 25, 28) being associated with the control cams (16a; 16b) and the guide slots (18a, 18b; 19) of the control plate (13a; 13b) which is displaced with the pivoting coupling housing (5).

2. The trailer coupling according to Claim 1, **characterised in that** the coupling housing (5) is arranged with an upper and a lower curved slot (22 and/or 23) on movement follow-up pins (20 and/or 21) of a housing (11) of the drive device (6), of which the upper movement follow-up pin (20) rolls on a control cam (16a) for lowering the coupling housing and the lower movement follow-up pin (21) rolls on a control cam (16b) of the control plate (13a, 13b) for raising the coupling housing (5), a central movement follow-up pin (28) of the coupling ball bar end (4) on the housing side runs in a guide slot (19) of the control cam (13a, 13b) sloping obliquely to the front and movement follow-up pins (24; 25) guided in vertical slots (18a, 18b) are moreover associated with the coupling housing (5).

3. The trailer coupling according to Claim 2, **characterised in that** the central movement follow-up pin (28) is arranged on a sleeve (8) enclosing the coupling ball bar end (4) on the housing side in the manner of a hose clip, which at the same time has a horizontal axial member (9) onto which an adjusting bar (7) of the drive device (6) is centrally articulated.

4. The trailer coupling according to Claim 3, **characterised in that** the sleeve (8) is fastened between an upper and lower ring gear portion (29a and/or 29b), configured on the peripheral side, of the coupling ball bar end (4) on the housing side, the ring gear portions (29a, 29b) being in meshing engagement with toothed racks (30) provided on the coupling housing (5).

5. The trailer coupling according to one of Claims 1 to 4, **characterised in that** the coupling housing (5) is nested with the control plate (13a; 13b) in a protective housing (14).

6. The trailer coupling according to Claim 1 and 5, **characterised in that** a block (15) providing a pivot bearing for the coupling ball bar (3) is movably arranged in a linear manner in the base of the protective housing (14).

7. The trailer coupling according to one of Claims 1 to 6, **characterised in that** the coupling ball bar end (4) on the housing side and a window-like frame part (32) of the drive housing (11) are configured with positive-locking contours (31; 33) engaging in one another in the operating position of the coupling ball bar (3).

8. The trailer coupling according to Claim 3 and 7, **characterised by** balls (33) arranged in cross members of the frame part (32), to which spherical cups (31) are associated in the coupling ball bar end (4) above and below the sleeve (8).

## Revendications

1. Attelage de remorque (1) pour véhicules automobiles, qui est fixé au véhicule au moyen d'une barre transversale (12), comprenant sur son extrémité libre une barre à boule (3) portant une boule d'attelage (2), qui est prévue dans un logement d'attelage pivotant (5) et qui peut être réglée d'une position opérationnelle vers une position de repos et inversement à l'aide d'un dispositif d'entraînement (6), un mouvement de rotation de la barre à boule (3) accompagnant ce réglage par pivotement, l'extrémité (4) de la barre à boule du côté du logement étant couplée par transmission avec l'intérieur du logement d'attelage (5),
**caractérisé en ce qu'**au moins une paroi longitudinale du logement d'attelage (5) est équipée d'un disque de manoeuvre (13a ; 13b), qui est conçu avec des courbes de manoeuvre (16a ; 16b) et des fentes de guidage (18a ; 18b ; 19) pour un abaissement et une élévation successifs du logement d'attelage (5) lors de son pivotement, accompagné du mouvement de rotation de la barre à boule (3) en fonction de la position, des tiges d'accompagnement de mouvement (20, 21 ; 24, 25, 28) étant attribuées aux courbes de manoeuvre (16a ; 16b) et aux fentes de guidage (18a ; 18b ; 19) du disque de manoeuvre (13a ; 13b) qui se déplace avec le logement d'attelage pivotant (5).

2. Attelage de remorque selon la revendication 1,
**caractérisé en ce que**
le logement d'attelage (5) est placé avec une fente arquée du dessus et une fente arquée du dessous (22 ou 23) sur les tiges d'accompagnement de mouvement (20 ou 21) d'un logement (11) du dispositif d'entraînement (6), parmi lesquelles la tige d'accompagnement de mouvement du dessus (20) roule sur une courbe de manoeuvre (16b) pour l'abaissement du logement d'attelage (5) et la tige d'accompagnement de mouvement du dessous (21) roule sur une courbe de manoeuvre (16b) du disque de manoeuvre (13a, 13b) pour l'élévation, une tige d'accompagnement de mouvement centrale (28) de l'extrémité (4) de la barre à boule du côté du logement passant dans une fente de guidage (19) du disque de manoeuvre (13a, 13b) inclinée en biais vers l'avant, des tiges d'accompagnement de mouvement (24, 25) introduites dans des fentes verticales (18a, 18b) étant en outre attribuées au logement d'attelage (5).

3. Attelage de remorque selon la revendication 2,
**caractérisé en ce que**
la tige centrale d'accompagnement de mouvement (28) est prévue sur un manchon (8) entourant l'extrémité (4) de la barre à boule du côté du logement à la façon d'un collier de serrage, le manchon comportant en même temps un segment d'axe horizontal (9), auquel est articulée de façon centrée une barre de réglage (7) du dispositif d'entraînement (6).

4. Attelage de remorque selon la revendication 3,
**caractérisé en ce que**
le manchon (8) est fixé entre la section supérieure et la section inférieure d'une couronne dentée (29a ou 29b) de l'extrémité (4) de la barre à boule du côté du logement, formées sur la périphérie, les sections de couronne dentée (29a, 29b) engrenant avec des crémaillères (30) prévues sur le logement d'attelage (5).

5. Attelage de remorque selon l'une des revendications 1 à 4,
**caractérisé en ce que**
le logement d'attelage (5) est emboîté dans un logement de protection (14) avec le disque de manoeuvre (13a ; 13b).

6. Attelage de remorque selon les revendications 1 et 5,
**caractérisé en ce que**
un bloc (15) mettant à disposition un palier de pivotement pour la barre à boule (3) est placé de façon linéairement mobile au fond du logement de protection (14).

7. Attelage de remorque selon l'une des revendications 1 à 6,
**caractérisé en ce que**
l'extrémité (4) de la barre à boule du côté du logement et la pièce de cadre (32) semblable à une fenêtre sur le logement d'entraînement (11) sont formées avec des contours à complémentarité de forme (21 ; 33) qui engrènent en position de fonctionnement de la barre à boule (3).

8. Attelage de remorque selon les revendications 3 et 7,
**caractérisé par**
des boules (33) prévues sur des barres transversales de la pièce de cadre (32), auxquelles sont attribuées des calottes de boules (31) à l'extrémité (4) de la barre à boule au-dessus et au-dessous du manchon (8).
